# FASCICULE DE BREVET EUROPEEN

(11) **EP 2 065 539 B1**
(45) Date de publication et mention de la délivrance du brevet: **24.02.2010**
(21) Numéro de dépôt: 08370022.9
(22) Date de dépôt: 25.11.2008
(51) Int. Cl.: E04H 3/16, E04B 1/32

(54) **Structure de couverture, notamment pour piscine, comportant au moins un panneau coulissant relevable**
Abdeckstruktur insbesondere für Schwimmbäder, die mindestens eine, nach oben verschiebare Schiebeplatte umfasst
Covering structure, in particular for a swimming pool, comprising at least one liftable sliding panel

(30) Priorité: 27.11.2007 FR 0708278; 25.11.2008 FR 0806625
(43) Date de publication de la demande: 03.06.2009
(73) Titulaire: Societe Nouvelle Structures Aluminium Services "S.N.S.A.S., 59100 Roubaix (FR)
(72) Inventeur: Demay, Stéphane, 59130 Lambersart (FR)
(74) Mandataire: Matkowska, Franck

(56) Documents cités:
- DE-A1- 3 037 678
- FR-A- 2 892 745
- US-A- 3 056 451
- US-A- 5 054 162

## Description

### Domaine technique

La présente invention concerne le domaine des abris comportant une structure de couverture équipée d'au moins un panneau coulissant relevable, qui comporte une plaque déformable, et qui permet d'ouvrir au moins partiellement un abri. En particuliers, l'invention concerne un système d'assistance au relevage du ou des panneaux coulissants de la structure de couverture. L'invention trouve préférentiellement son application à la réalisation de structures de couvertures légères capables d'abriter une zone d'activité ou une zone de loisirs, et en particulier une piscine, une serre, ou encore une véranda.

### Art antérieur

A ce jour, pour abriter une zone d'activité ou de loisirs telles que celles citées ci-dessus, il est courant d'utiliser une structure de couverture composée d'arceaux, disposés en regard les uns des autres et formant une voûte au dessus de la zone à abriter, et de panneaux coulissant entre deux arceaux successifs. Chaque panneau comporte une plaque qui est déformable, de manière à s'adapter à la courbure des arceaux lors de son relevage ou de son abaissement.

Chaque arceau est constitué soit d'un unique profilé cintré, soit de plusieurs profilés cintrés assemblés bout à bout en sorte de former une arche. Ces profilés sont généralement obtenus par extrusion, et sont de préférence réalisés dans un matériau léger résistant à la corrosion et aux intempéries, tel que par exemple de l'aluminium ou du bois lamellé collé. Les panneaux de couvertures sont le plus souvent constitués de plaques transparentes ou translucides égaiement réalisées dans un matériau léger résistant à la corrosion et aux intempéries. A titre indicatif, le matériau le plus utilisé à ce jour dans le domaine des abris et en particulier des abris de piscine pour la réslisation des panneaux de couverture est le polycarbonate (alvéolaire ou compact).

Dans le cadre de ces structures de couverture pour abris, il est utile de pouvoir ménager une ou plusieurs ouverture dans l'abri, par exemple pour dégager un accès supplémentaire et ainsi faciliter l'entrée ou la sortie des utilisateurs, pour aérer l'intérieur de l'abri, ou encore pour profiter des rayons du soleil en cas de beau temps. A cet effet, des structures de couvertures à panneaux coulissants relevables ont été divulguées dans les demandes de brevet FR 2 816 343, EP 0 224 290 et dans le brevet US 4 783 861. Dans ces publications, il est décrit des arceaux comprenant une glissière dans laquelle un panneau de couverture peut coulisser entre deux arceaux entre une position basse et une position haute.

Un premier inconvénient lié à ce type de solution est la difficulté pour l'utilisateur de l'abri à manipuler le ou les panneaux coulissants en raison de leur poids et de leur cintrage. En effet, ces panneaux sont le plus souvent d'une taille importante et sont par conséquent relativement lourd. De plus, en raison de leur cintrage, les panneaux frottent de manière préjudiciable contre les glissières dans lesquelles ils coulissent, accentuant ainsi la difficulté pour l'utilisateur à relever ces panneaux. Un deuxième inconvénient de ce type de solution est la dangerosité pour les personnes, et plus particulièrement les enfants, liée à la manipulation des panneaux coulissants. Plus précisément, une fermeture accidentelle ou mal contrôlée de l'abri peut entraîner un coulissement brutal vers le bas d'un panneau et causer des dommages corporels à l'utilisateur, c'est ce que l'on appelle l'effet guillotine. Ces inconvénients constituent ainsi une limite préjudiciable à la mise en oeuvre de panneaux coulissants de grandes dimensions et notamment en hauteur dans le cadre d'une application dans un abri haut.

Pour remédier à ces problèmes, la demande de brevet allemand DE 198 44 031 décrit une structure de couverture en arceau munie de panneaux coulissants et d'un système d'assistance au relevage des panneaux. Plus précisément, les arceaux constituant la voûte de l'abri comportent des profilés qui sont chacun muni d'au moins deux glissières longitudinales et parallèles de manière à ce qu'un panneau puisse coulisser dans une glissière pendant qu'un ressort s'étendant dans l'autre glissière assiste, par l'intermédiaire d'un ergot, le panneau coulissant dans son relevage. Néanmoins, cette solution présente également des inconvénients. Un premier inconvénient est lié à l'utilisation dans les arceaux de deux glissières longitudinales disposées parallèlement, l'une pour le ressort du système d'assistance au relevage, l'autre pour le panneau relevable. En effet, cette disposition particulière du panneau et du système d'assistance au relevage nuit à la compacité de l'ensemble et dans une moindre mesure à son esthétisme. De plus, un deuxième inconvénient découlant directement de ce système d'aide au relevage et son impossibilité à s'adapter sur des structures de couvertures existantes en raison de la nécessité de la présence de deux glissières parallèles dont l'une est dédiée au ressort. Enfin, un troisième inconvénient de cette solution est le bruit engendré par les frottements des spires du ressort lors de son extension et sa contraction dans la glissière.

Une autre solution décrite dans la demande de brevet français FR 2 892 745 permet de surmonter les inconvénients liés au poids des panneaux et à l'encombrement du système d'assistance au relevage des panneaux. En effet, ce document divulgue un système d'assistance au relevage des panneaux sensiblement identiques à celui décrit dans la demande de brevet allemand DE 198 44 031, c'est à dire un système constitué d'un ressort logé dans le profilé en arceaux. En outre, ce système présente l'avantage de réduire l'encombrement de l'ensemble en positionnant dans une même glissière le panneau coulissant relevable et le ressort du système d'assistance au relevage. Toutefois, cette solution ne permet pas d'éliminer l'inconvénient précédemment décrit et lié au bruit engendré par le frottement des spires du ressort sur les parois de la glissière du profilé. Le bruit est en outre accentué par la forme du profilé qui agit comme une de cage de résonance.

La demande de brevet français FR 289 2745 décrit une structure correspondant au préambule de la revendication 1.

### Objectif de l'invention

La présente invention a pour premier objectif de proposer une nouvelle structure de couverture pour une zone extérieure donnée, en particulier (mais pas exclusivement) une piscine, la structure comprenant au moins un panneau coulissant relevable assisté par des moyens d'aide au relevage qui sont silencieux.

La présente invention a pour deuxième objectif de proposer une nouvelle structure de couverture qui comprend au moins un panneau coulissant relevable assisté par des moyens d'aide au relevage qui sont compactes et ne nuisent pas à l'esthétique de la structure.

### Rrésumé de l'invention

Ces objectifs sont atteints par l'invention qui a pour objet une structure de couverture d'une zone donnée, ladite structure comprenant :
- deux arceaux disposés parallèlement en regard l'un de l'autre et formant une voûte ou demi-voûte au dessus de ladite zone donnée, les arceaux comportant chacun au moins une glissière longitudinale,
- un panneau relevable comportant une plaque qui est montée et apte à coulisser dans les glissières des deux arceaux, et qui est déformable de manière à s'adapter à la courbure des glissières,
- des moyens d'aide au relevage permettant d'assister le relevage du panneau coulissant le long des glissières des arceaux,

De manière caractéristique, les moyens d'aide au relevage comportent un câble et des moyens d'enroulement du câble, qui comportent une poulie permettant l'enroulement du câble lors du relevage du panneau et des moyens de rappel élastique de la poulie permettant la rotation de la poulie dans la direction d'enroulement du câble sur la poulie ; le câble est logé dans une glissière d'un arceau , et relie le panneau relevable à la poulie, la partie du câble entre le panneau et les moyens d'enroulement du câble étant plaquée contre l'une des parois longitudinales de la glissière et suivant la courbure de ladite paroi longitudinale.

Plus particulièrement, la structure de couverture de l'invention peut comporter les caractéristiques additionnelles et facultatives ci-après, prises isolément ou le cas échéant en combinaison :
- une glissière comporte une rainure longitudinale, dans laquelle est positionné le câble, et qui permet un guidage et un maintien latéral du câble,
- les moyens de rappel élastiques de la poulie comportent un ressort de rappel,
- le ressort de rappel est un ressort de torsion en spiral (semi-hyperbolique),
- les moyens d'aide au relevage du panneau relevable comportent au moins deux ensembles de relevage qui comportent chacun un câble, une poulie et des moyens de rappels élastiques qui sont montés respectivement sur les deux arceaux en vis-à-vis supportant le panneau relevable,
- les moyens de rappel élastique sont adaptés de manière à exercer une traction suffisamment forte sur le panneau relevable pour éviter que ledit panneau ne coulisse vers le bas, jusque dans sa position fermée, sous l'action de son seul poids,
- les moyens de rappel élastique sont adaptés de manière à exercer une traction apte à maintenir le panneau immobile en position ouverte lorsqu'il est relâché par l'utilisateur,et ceci à n'importe quelle position de relevage,
- la structure comprend au moins deux panneaux relevables coulissant et des moyens de liaison permettant de solidariser temporairement ensemble les deux panneaux relevables,
- la structure comprend au moins deux panneaux relevables qui sont manipulables indépendamment l'un de l'autre,
- chacun des panneaux relevables est équipé de ses propres moyens d'aide au relevage, lesdits moyens d'aide au relevage comportant au moins un câble, une poulie, et des moyens de rappel élastiques,
- la structure comporte des moyens de verrouillage/déverrouillage permettant en position verrouillée de bloquer un panneau relevable, et en position déverrouillée de libérer le panneau relevable,
- la poulie et les moyens de rappel élastiques sont logés intégralement dans un boitier qui est fixé sur un arceau,
- le câble est un câble non métallique,
- le câble comprend une âme et une couverture qui est non métallique,
- le matériau constitutif de la couverture du câble est un polymère
- l'âme du câble est composée d'au moins deux fils de poly-para-phénylène téréphtalamide retordus,
- la couverture du câble est composée de fuseaux tressés.

La structure de couverture peut également présenter les caractéristiques suivantes. Elle comprend :
- deux arceaux disposés parallèlement en regard l'un de l'autre et formant une voûte ou demi-voûte au dessus de la zone couverte, les arceaux comportant chacun au moins une glissière longitudinale,
- au moins deux panneaux relevables qui sont montés et aptes à coulisser dans les glissières des deux arceaux, et des moyens de liaison permettant de solidariser temporairement ensemble les deux panneaux relevables,
- des moyens d'aide au relevage permettant d'assister le relevage d'au moins un panneau coulissant le long des glissières des arceaux, lesdits moyens d'aide au relevage comportant au moins un câble, qui est logé dans une glissière d'un arceau, et qui relie au moins un panneau relevable, et de préférence au moins le panneau relevable supérieur, à une poulie permettant l'enroulement du câble lors du relevage du panneau, et des moyens de rappel élastique de la poulie permettant la rotation de poulie dans la direction d'enroulement du câble sur la poulie.

### Brèves description des figures

D'autres caractéristiques et avantages de l'invention apparaitront plus clairement à la lecture de la description détaillée ci-après d'une structure de couverture de l'invention, laquelle description est donnée à titre d'exemple non limitatif et non exhaustif de l'invention, et en référence aux figures annexées parmi lesquelles :
- la figure 1 est une représentation en perspective d'une structure de couverture selon une première variante de l'invention ;
- la figure 2 est une représentation schématique en vue de côté de la structure de couverture de la figure 1 ;
- la figure 3 est une vue en section transversale d'un profilé de la structure de couverture selon l'invention,
- la figure 4 est une représentation en perspective du profilé de la figure 3 ;
- la figure 5 est une vue en section transversale du profilé des figures 3 et 4, sur lequel on a fixé une plaque de toiture, une traverse de contreventement et des capots de finition intérieur et extérieur ;
- la figure 6 est une vue en section transversale du profilé des figures 3 et 4, faisant apparaitre le fourreau permettant l'assemblage de deux profilés ;
- la figure 7 est une vue éclatée d'un exemple de mécanisme d'aide au relevage de l'invention, qui est logé dans boîtier destiné à être fixé sur un arceau de la structure de couverture de l'invention;
- les figures 8 et 9 sont des représentations en perspective d'une moitié de la poignée permettant le verrouillage et déverrouillage d'un panneau relevable de la structure de couverture;
- la figure 10 est une représentation schématique d'une deuxième variante de structure de couverture selon l'invention ;
- la figure 11 est une représentation schématique d'un demi-abri selon l'invention apte à recevoir les moyens d'aide au relevage d'un panneau coulissant.

### Description détaillée

On a représenté sur les figures annexées, une structure de couverture d'une zone extérieure donnée. La structure de couverture représentée peut être utilisée pour recouvrir tout type de zone de loisirs ou d'activité, en particuliers une véranda ou une serre et de préférence une piscine.

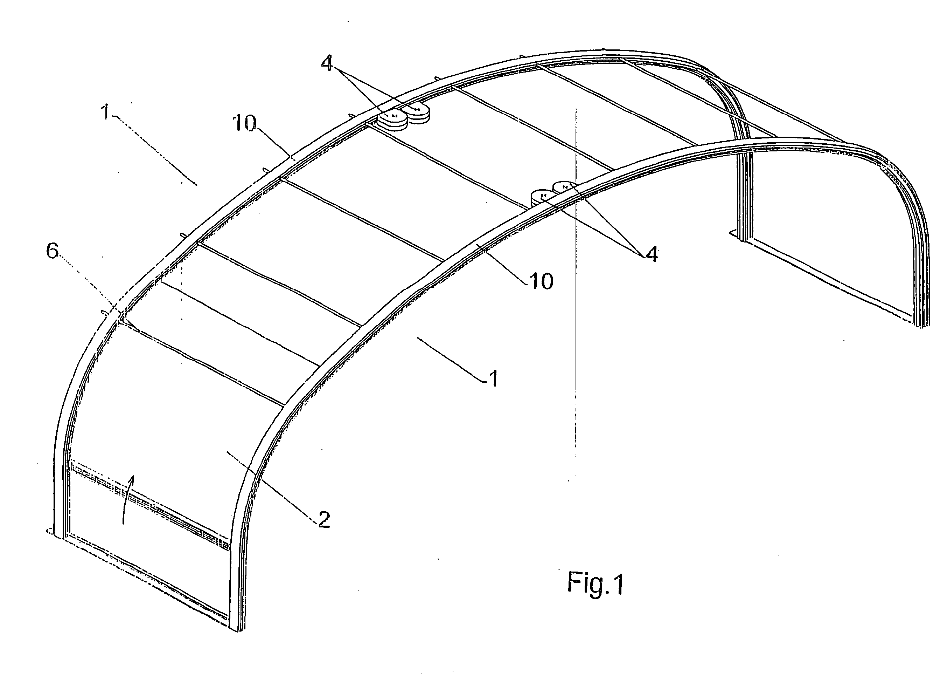

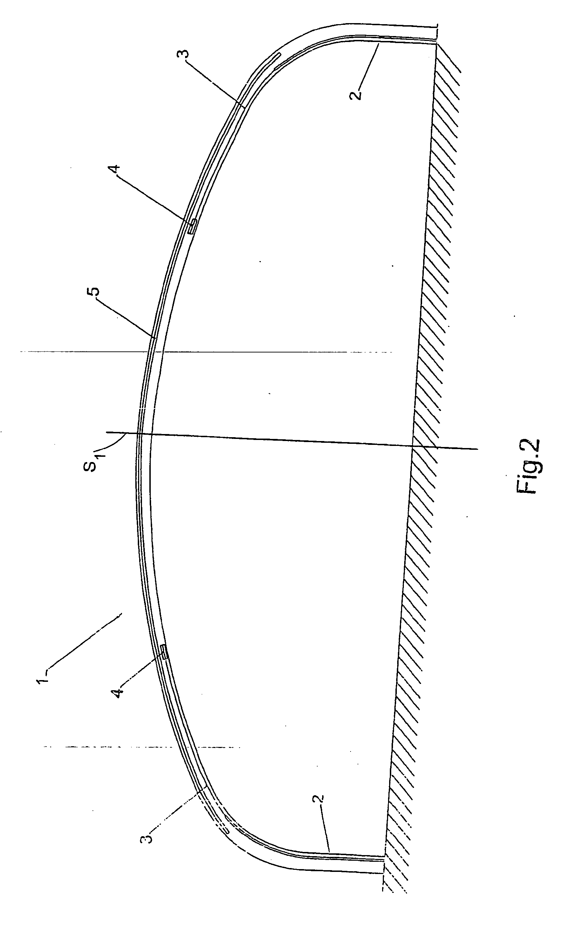

Conformément à une première variante de réalisation de l'invention et en référence aux figures 1 et 2, ladite structure de couverture est symétrique par rapport à un plan de symétrie vertical central S₁. Elle comprend au moins deux arceaux 1 disposés parallèlement en regard l'un de l'autre et entre lesquels sont positionnés une plaque de toiture fixe 5 en partie haute, des traverses 6 et deux panneaux relevables 2. Les deux panneaux relevables 2 sont situés en partie basse de la structure. Chaque panneau 2 comporte une plaque, qui peut coulisser entre les arceaux 1, entre une position basse de fermeture et une position haute d'ouverture de ladite structure, et qui est déformable de manière à adapter sa courbure à la courbure des arceaux lors de son relevage ou de son abaissement.

Pour assister l'utilisateur dans le relevage des panneaux coulissants 2, la structure de couverture est équipée de moyens d'aide au relevage comprenant au moins un câble 3 et des moyens d'enroulement du câble, qui dans la variante particulière des figures annexées sont réalisés sous la forme d'un boitier 4 contenant une poulie d'enroulement 40 associée à un ressort de rappel 41. Cependant, de manière optimale, et comme représenté dans les exemples de réalisation des figures annexées, il est possible de positionner, dans chaque arceau 1 dans lesquels coulissent les panneaux 2 et de part et d'autre du plan de symétrie S₁, un boitier 4 et un câble 3 permettant d'assister le relevage des panneaux 2.

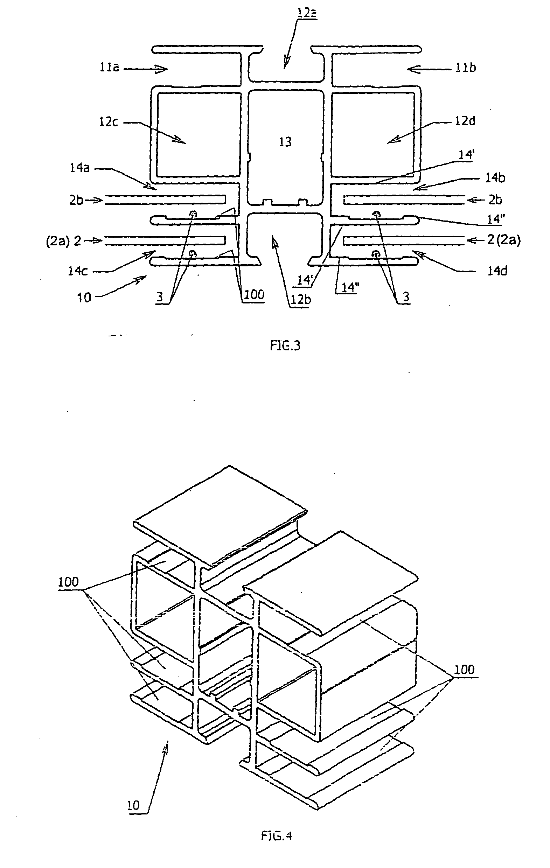

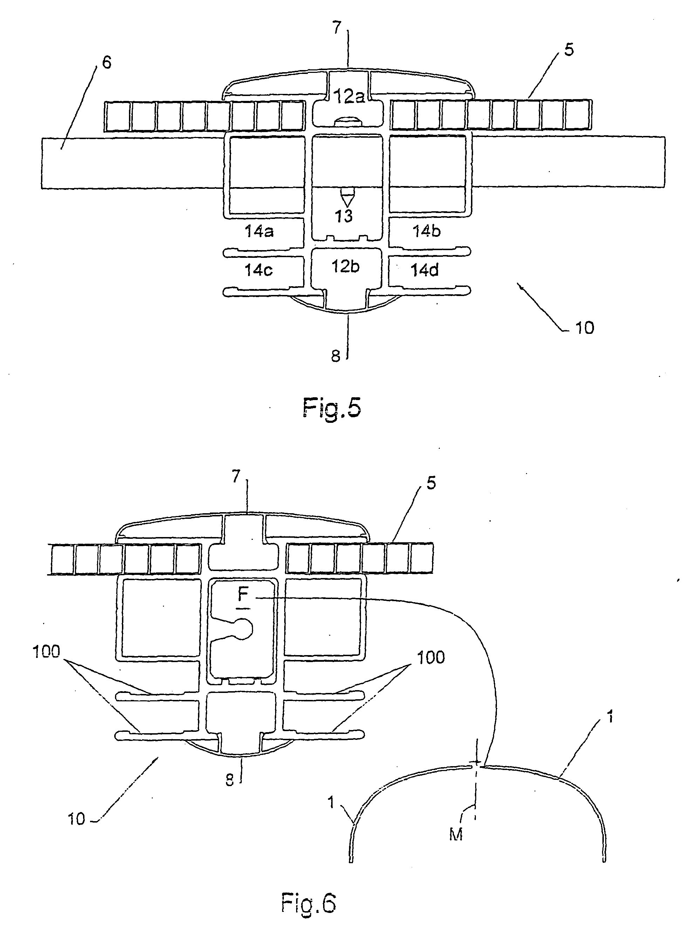

En référence aux figures 3 à 6, un arceau 1 de la structure de couverture est constitué d'un ou de plusieurs profilés 10 extrudés, par exemple en aluminium, assemblés bout à bout en sorte de former une voûte. Dans l'exemple de réalisation particulier des figures annexées, un arceau 1 est constitué de deux profilés 10 qui sont assemblés bout à bout, au moyen d'un fourreau F (figure 6). Chaque profilé 10 comprend, des rainures 11a, 11b, une cage supérieure 12a, une cage inférieure 12b, une ouverture centrale 13, et des glissières 14a, 14b, 14c, 14d dans lesquelles peuvent coulisser les panneaux relevables 2 en polycarbonate compact et les câbles 3.

Les rainures 11 a, 11 b sont destinées à accueillir une plaque de toiture 5, qui est réalisée de préférence en polycarbonate alvéolaire, pour le recouvrement d'une zone extérieure donnée. Les rainures 11a, 11b comprennent également chacune une gouttière 100 permettant de drainer vers le bas les eaux de condensation éventuelles.

La cage supérieure 12a permet la fixation de traverses de contreventement 6 par l'intermédiaire d'une vis, comme représenté à la figure 5. Ces traverses 6, positionnées entre deux arceaux 1, ont pour but de rigidifier et stabiliser la structure de couverture. La cage supérieure 12a est également apte à recevoir par clipsage un capot de finition extérieur 7 destiné à masquer et protéger le profilé 10.

La cage inférieure 12b peut quant à elle recevoir par clipsage un capot de finition intérieur 8 destiné à protéger et masquer le profilé 10 lorsque l'on se trouve à l'intérieur de la structure de couverture. Ceci vise à améliorer l'aspect esthétique de ladite structure de couverture.

Dans certains cas, la structure de couverture comprend une pluralité de voutes qui sont mobiles en translation le long de la zone à abriter en sorte d'être empilée les unes sur les autres et de réduire l'encombrement de ladite structure. A cet effet, les cages 12a et 12b sont apte à recevoir chacune un joint de type EPDM permettant d'assurer l'étanchéité dans les arceaux.

L'ouverture centrale 13 est apte à recevoir un fourreau F, de préférence en aluminium, pour l'assemblage de deux demi-profilés 10 (figure 6). Par ailleurs, le même type d'assemblage peut être réalisé pour la fixation des arceaux 1 au sol ou sur un chariot dans le cas d'une structure de couverture comprenant des voûtes mobiles.

En référence à la figure 3, les glissières 14a, 14b, 14c, 14d dans lesquelles peuvent coulisser les panneaux relevables 2 comportent deux parois longitudinales supérieure 14' et inférieure 14". Dans la paroi longitudinale inférieure 14" de chaque glissière 14a, 14b, 14c, 14d, est réalisée une rainure longitudinale 100, à fonction notamment de gouttière, permettant de drainer vers le bas les eaux de condensation éventuelles. En outre, chaque câble 3 est avantageusement logé dans une rainure 100, et la partie du câble entre le panneau 2 et les moyens d'enroulement du câble (boîtier 4 contenant la poulie 40 et son ressort de rappel 41 ) est tendue et plaquée contre la paroi 14', dans le fond de la rainure 100 et suit avantageusement la courbure de la paroi 14'. Chaque câble est ainsi avantageusement masqué, ce qui permet de rendre l'ensemble plus esthétique. En outre, une rainure longitudinale 100, dans laquelle est positionné un câble 3, permet avantageusement un guidage et un maintien latéral du câble 3 lors de son déplacement dans l'arceau 1.

Sur la figure 3, les deux glissières 14b, 14b reçoivent les panneaux relevables 2. Dans une autre variante, les panneaux relevables 2 pourraient être guidés dans les glissières 14c, 14d. Dans une autre variante, l'arceau pourrait comporter uniquement une seule paire de glissières 14a et 14b ou 14c et 14d.

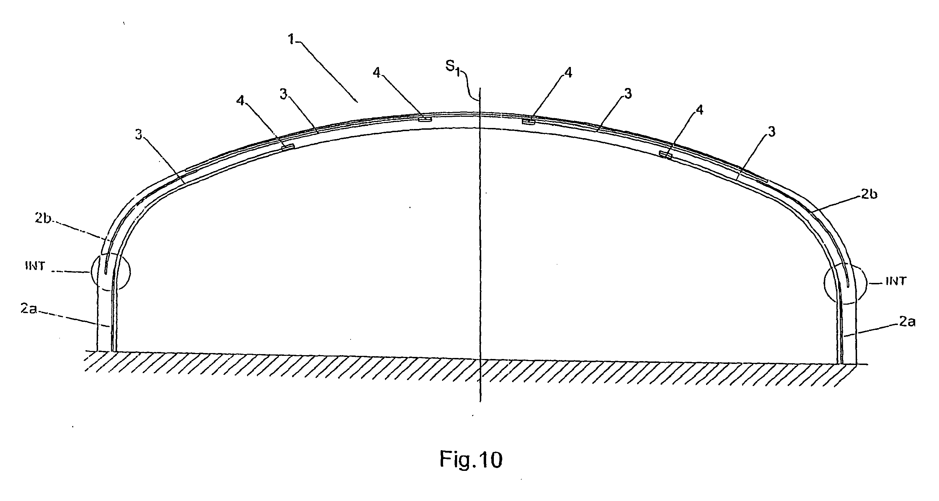

Lorsque l'arceau comporte deux paires de glissières 14a, 14b, et 14c, 14d, il peut avantageusement être utilisé pour guider deux panneaux relevables inférieur 2a et supérieur 2b, tel que cela sera décrit plus en détail dans la variante de la figure 10. Sur cette figure 3, on a également référencé entre parenthèses les panneaux inférieurs 2a de cette variante de la figure 10 et on a représenté les panneaux relevables supérieurs 2b et leurs câbles de relevage 3 qui correspondent à la variante de la figure 10.

La plaque qui est constitutive d'un panneau relevable 2, et qui est déformable en sorte de s'adapter aux rayons de courbures des glissières des arceaux 1, est de préférence réalisée en polycarbonate compact transparent ou translucide et est résistante aux chocs et à l'abrasion. Plus précisément, le panneau relevable 2 peut coulisser grâce à deux glissières situées chacune dans un arceau 1, lesdites glissières étant disposées en vis-à-vis l'une de l'autre. Par exemple, les panneaux 2 situés de part et d'autre du plan de symétrie S₁ peuvent coulisser par l'intermédiaire de la glissière 14a d'un premier profilé 10 et de la glissière 14b d'un deuxième profilé 10 en regard dudit premier profilé ou encore par l'intermédiaire de la glissière 14c du premier profilé et de la glissière 14d du deuxième profilé en regard dudit premier profilé.

Le panneau 2 comprend également en partie basse des moyens de verrouillage/déverrouillage qui permettent, en position verrouillée de bloquer ledit panneau relevable 2, et en position déverrouillée dé libérer ledit panneau relevable 2. Ces moyens de verrouillage/déverrouillage sont matérialisés, dans l'exemple particulier des figures annexées, par une poignée P qui permet à l'utilisateur de la structure de manipuler facilement le panneau 2.

Les panneaux 2 sont relativement lourds, pour cette raison il est nécessaire de compenser au moins partiellement leur poids lors de leur relevage grâce aux moyens d'aide au relevage constitués par les câbles 3 et les boitiers 4.

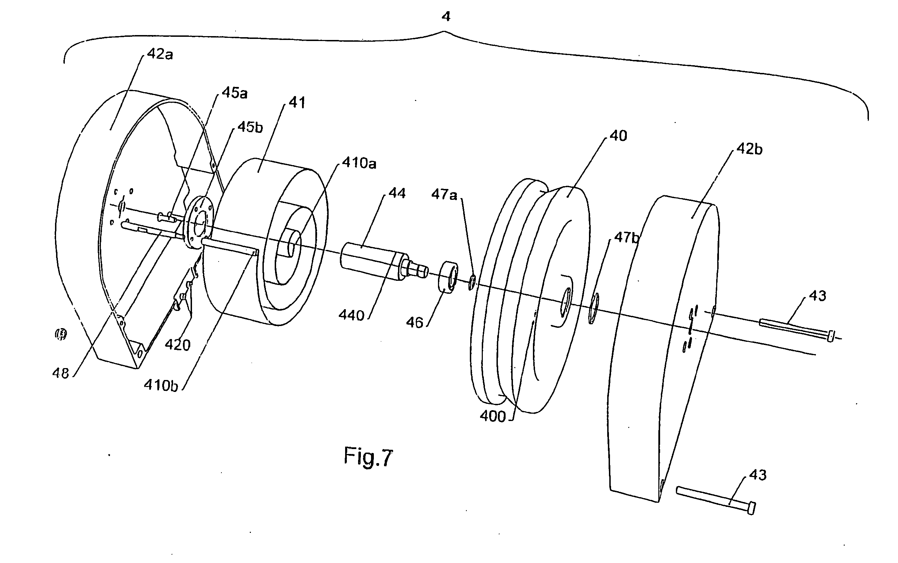

Les boitiers 4 sont fixés par tout moyen à la portée de l'homme du métier sur les arceaux 1 de la structure de couverture. De préférence, les boitiers 4 sont fixés latéralement dans les mêmes glissières que celles dans lesquelles coulisse le panneau relevable 2. On a représenté à la figure 7 une vue éclatée d'un boitier 4 de l'invention. Il comprend deux coques 42a, 42b sensiblement identiques qui sont assemblables au moyen de vis de fixation 43. Il comprend en outre un axe 44 sur lequel est enroulé un ressort de torsion en spiral 41. Ledit axe 44 est immobilisé en rotation et en translation en étant fixé sur la face intérieure de la coque 42a et sur la face intérieure de la coque 42b au moyen de vis 45a. Plus précisément, l'axe 44 comprend une rainure 440 dans laquelle vient se loger l'extrémité intérieur 410a du ressort de torsion en spiral 41. Par ailleurs, pour empêcher le ressort de torsion en spiral de sortir hors de la rainure 440, on a placé une rondelle 45b qui est fixée sur la face intérieure de la coque 42a, sous l'axe 44. Un roulement 46 est en outre monté sur l'axe 44 de manière à ce qu'une poulie 40 vienne s'emboiter à la fois sur ledit roulement 46 et ledit axe 44 et puisse tourner autour de cet axe 44. La poulie 40, sur laquelle est fixé le câble 3 (non représenté) est soumise à l'action du ressort de rappel 41 au moyen d'un axe d'entrainement 48 qui est inséré dans l'extrémité extérieur 410b dudit ressort de torsion en spiral et emboité dans un orifice traversant 400 ménagé en périphérie de la poulie 40. Plus précisément, ledit ressort 41 et l'axe d'entrainement 48 agissent sur la dite poulie 40 en sorte de la rappeler élastiquement en rotation dans la direction d'enroulement du câble 3 et ainsi permettre l'enroulement dudit câble 3 sur ladite poulie 40 provoquant le relevage d'un panneau 2. Des anneaux élastiques 47a et 47b sont disposés à l'intérieur de la poulie 41 de manière à maintenir le roulement 46 dans ladite poulie 41. Enfin, la coque 42a est pourvue de bagues 420, entre lesquelles circule le câble 3. Elles permettent le guidage et le changement de direction du câble 3 (non représenté) vers les glissières 14a, 14b, 14c ou 14d à la sortie du boitier 4.

De manière avantageuse, le boitier 4 est réversible, c'est-à-dire qu'il peut à la fois être utilisé et fixé sur un arceau 1 situé soit sur la droite du panneau relevable 2 soit sur sa gauche. Les bagues 420 contribuent également à la réversibilité du boitier en permettant d'orienter le câble 3 en sortie du boitier dans les deux directions possibles.

Egalement, de manière avantageuse, la tension des ressorts 41 des boîtiers 4 permettant d'assister le relevage de panneaux 2, est adaptée et/ou réglée de manière à ce que lorsqu'un utilisateur relâche délibérément ou par inadvertance un panneau 2 lors de son relevage, ledit panneau reste immobilisé dans la position dans laquelle il a été relâché. Ceci permet d'éviter l'effet guillotine pouvant causer des dommages corporels aux utilisateurs et assure ainsi un niveau de sécurité optimal. Plus précisément, la force de traction exercée par le ressort 41 sur le panneau relevable 2, par l'intermédiaire du câble 3, est suffisamment forte pour éviter que ledit panneau 2 ne coulisse vers le bas dans sa position fermée sous l'action de son seul poids. En outre, cette force de traction est apte à maintenir le panneau relevable 2 immobile lorsque celui est relâché par l'utilisateur et est libre de toute contrainte manuelle, indépendamment de la position dans laquelle se trouve le panneau coulissant 2. Les frottements du panneau relevable 2 dans les glissières des arceaux 1, ainsi que la courbure desdits arceaux 1 contribuent également à immobiliser ledit panneau 2 en position ouverte, l'ouverture pouvant être partielle ou totale.

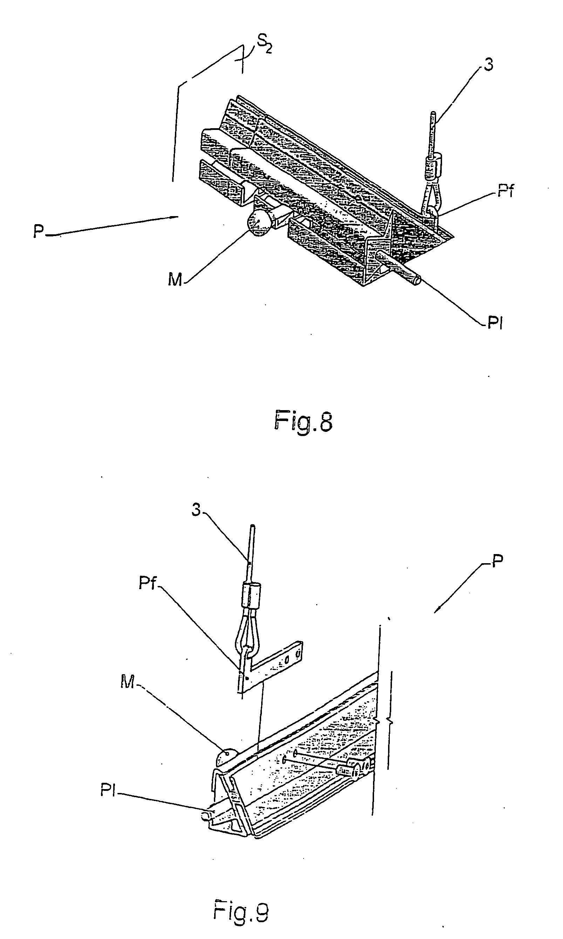

Les câbles 3 sont chacun reliés comme représenté aux figures 8 et 9, à une extrémité de la poignée P d'un panneau 2 et à la poulie 40 du boitier 4. Ils sont maintenus constamment en tension sous l'effet du ressort de rappel 41 permettant de rappeler élastiquement en rotation la poulie 40 et du poids d'un panneau relevable 2. Un câble 3 peut être réalisé dans tout matériau approprié à condition qu'il soit très résistant à l'abrasion et qu'il ne s'allonge pas sous l'effet du poids d'un panneau 2. De préférence, on utilisera un câble 3 non métallique afin de réduire les frottements dans les glissières 14a, 14b, 14c ou 14d et le bruit engendré par ces frottements lors notamment du relevage du panneau 2. On préférera en particulier, un câble 3 comprenant une âme et une couverture en polymère. Par exemple, on pourra utiliser un câble 3 comprenant une âme composée de deux fils de poly-para-phénylène téréphtalamide (Kevlar®) retordus et une couverture en polyester composée fuseaux tressés.

Aux figures 8 et 9, on a représenté les moyens de verrouillage/déverrouillage du panneau relevable 2. Plus précisément, on a représenté seulement la moitié de la poignée P, étant précisée que ladite poignée P est symétrique par rapport à un plan de symétrie vertical central S₂. La poignée P est située en partie basse des panneaux relevables 2 et transversalement aux arceaux 1 de la structure de couverture. Elle est apte, en position verrouillée, à immobiliser les panneaux 2 le long des arceaux 1 afin de contribuer à la sécurité d'utilisation de la structure. Egalement, la poignée P est apte, en position déverrouillée à libérer les panneaux 2 afin de pouvoir abaisser ou relever ces derniers de manière à respectivement fermer ou ouvrir la structure de couverture. A cet effet, elle comprend deux pênes latéraux PI, chacun asservi à une manette M. Les pênes PI sont situés de part et d'autre de ladite poignée P (à ses extrémités) et sont aptes à venir s'engager dans des gâches (non représentées) situées à différent niveaux sur les arceaux 1 de la structure de couverture. La poignée P comprend également deux pattes de fixation Pf sur lesquelles sont fixés les câbles 3. De manière avantageuse, les pattes de fixation sont vissées sur la poignée P ce qui permet d'adapter cet assemblage à tout type de poignées existantes.

Pour manipuler la structure de couverture précédemment décrite, et plus particulièrement pour relever un panneau 2, il suffit à l'utilisateur d'actionner les manettes M situées de part et d'autre de la poignée P en sorte de déverrouiller ledit panneau 2. Cette action a pour effet de faire sortir les pênes PI des gâches situées dans les arceaux 1 de la structure. Puis, l'utilisateur peut relever le panneau 2 par l'intermédiaire de la poignée P. De manière caractéristique, le relevage du panneau 2 est assisté par les moyens d'aide au relevage que sont les câbles 3 et les boitiers 4. De manière avantageuse, lorsque le panneau 2 est en position basse de fermeture, la tension du ressort de rappel 41 est maximale en sorte que l'effet de traction effectué par les moyens d'aide au relevage sur le panneau 2 soit maximal. Ainsi, une fois ledit panneau 2 déverrouillé, le ressort 41 tend à rappeler élastiquement en rotation la poulie 40, par l'intermédiaire de l'axe d'entrainement 48, de façon à enrouler le câble 3 autour de ladite poulie 40 et à assister le relevage dudit panneau 2. Enfin, pour sécuriser le panneau 2 en position haute d'ouverture, l'utilisateur de la structure n'a plus qu'à actionner de nouveau les manettes M à hauteur des gâches en sorte de verrouiller le panneau 2. En outre, pour replacer le panneau 2 en position basse de fermeture, il est bien entendu que l'utilisateur aura à déverrouiller le panneau 2, puis à l'abaisser jusqu'à ladite position basse et enfin à verrouiller ledit panneau à l'aide des manettes M.

Dans une deuxième variante de réalisation de l'invention, représentée à la figure 10, la structure de couverture comprend quatre panneaux relevables 2 qui sont logés deux à deux dans les arceaux 1 de ladite structure et de part et d'autre du plan de symétrie S₁. Plus précisément, lorsque la structure de couverture est fermée, d'un côté du plan de symétrie S₁ un premier panneau 2a s'étend du niveau du sol jusqu'à un niveau intermédiaire INT alors qu'un deuxième panneau 2b s'étend du niveau intermédiaire INT, sensiblement à mi-hauteur de la structure de couverture, jusqu'à la plaque de toiture 5, cette disposition est reproduite symétriquement de l'autre côté du plan de symétrie S₁. Egalement, dans une configuration optimale de la structure de couverture selon cette deuxième variante de l'invention, les panneaux 2a inférieurs coulissent dans les rainures 14c et 14d de deux profilés 10 situés de part et d'autre des panneaux 2 alors que les panneaux 2b supérieurs coulissent dans les rainures 14a et 14b.

En outre, les panneaux 2a et 2b sont chacun muni d'une poignée P telle que décrite précédemment aux figures 8 et 9, et sont de manière avantageuse reliés l'un à l'autre grâce à des moyens de liaison, dans le cas présent, une deuxième poignée P' dite intermédiaire. Cette poignée intermédiaire P' permet ainsi à l'utilisateur soit de solidariser les panneaux 2a et 2b afin de relever les deux dits panneaux 2a, 2b en une seule opération soit de rendre indépendant les panneaux 2a, 2b l'un de l'autre afin de relever uniquement le panneau 2a ou 2b qu'il souhaite.

Dans la variante de la figure 10, chaque panneau relevable 2a, 2b est équipé de ses propres moyens d'aide au relevage (câble 3 - boîtier 4 contenant une poulie d'enroulement 40 associée et à ressort de rappel 41). Dans une autre variante de réalisation, seul l'un des deux panneaux 2a, 2b, et de préférence le panneau supérieur 2b, peut être équipé de moyens d'aide au relevage (câble 3 - boîtier 4 contenant une poulie d'enroulement 40 associée et à ressort de rappel 41), l'autre panneau étant dépourvu de moyens d'aide au relevage.

Dans le cas particulier de la variante de la figure 10, les boitiers 4 des moyens d'aide au relevage sont distincts et positionnés à différentes positions le long des arceaux. Dans une autre variante de réalisation, les deux boîtiers 4 d'un arceau pourraient être fixés à la même position sur l'arceau en étant superposés. Dans une autre variante de réalisation, pour un même arceau les deux poulies d'enroulement 40 avec leur propre ressort de rappel 41 pourraient être superposées et logées dan un même boîtier 4.

Idéalement, dans les deux variantes de l'invention décrites, la structure de couverture est symétrique, c'est-à-dire qu'elle est munie de panneau relevable 2 voire 2a et 2b de chacun des côtés du plan de symétrie S₁ de ladite structure. Toutefois, selon les configurations et les besoins de l'utilisateur, on pourra ne trouver des panneaux relevables que d'un seul côté du plan de symétrie S₁ de la structure de couverture.

Egalement, pour accroitre la facilité de manipulation du ou des panneaux relevables, on positionne des moyens d'aide au relevage dans chaque arceau 1 de la structure de couverture de manière à ce qu'il y ait deux moyens d'aide au relevage pour assister le relevage d'un panneau 2. Cependant, il est possible d'assister le relevage d'un panneau 2 avec un seul ensemble de relevage comprenant un câble 3, une poulie 40 et un ressort de rappel 41, à condition qu'ils soient suffisamment solide pour supporter le poids dudit panneau 2.

L'invention n'est toutefois pas limitée aux variantes de réalisation de la structure de couverture qui ont été décrites en référence aux figures annexées, mais s'étend plus généralement à toute réalisation couverte par les revendications annexées.

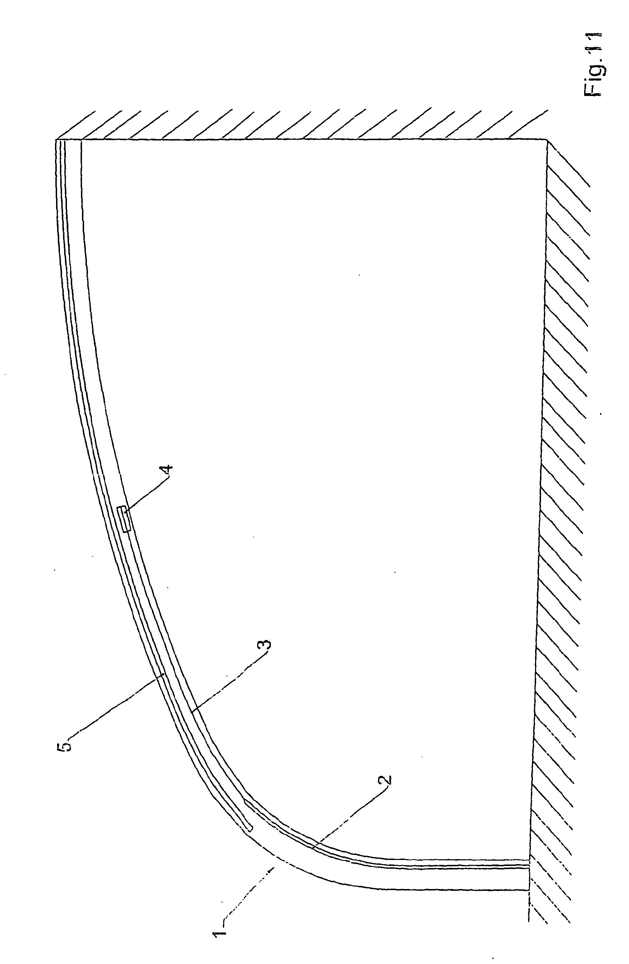

En particulier, et de manière non exhaustive, il est possible dans le cadre de l'invention, de réaliser une structure de couverture à panneau(x) relevable(s) qui est du type demi-abri, c'est-à-dire dans laquelle les arceaux forment des demi-voûtes et sont en appui haut contre une paroi verticale (mur ou équivalent) et en appui bas au sol (voir figure 11). Egalement, les arceaux 1 peuvent être réalisés au moyen de profilés présentant une section transversale différente de celle illustrée à titre d'exemple aux figures 3 et 4.

## Revendications

1. Structure de couverture d'une zone donnée, ladite structure comprenant :
- deux arceaux (1) disposés parallèlement en regard l'un de l'autre et formant une voûte ou demi-voûte au dessus de ladite zone donnée, les arceaux (1) comportant chacun au moins une glissière longitudinale (14a, 14b, 14c ou 14d),
- un panneau relevable (2, 2a, 2b) comportant une plaque qui est montée et apte à coulisser dans les glissières (14a/14b ou 14c/14d) des deux arceaux, et qui est déformable de manière à s'adapter à la courbure des glissières,
- des moyens d'aide au relevage permettant d'assister le relevage du panneau coulissant (2, 2a, 2b) le long des glissières (14a/14b ou 14c/14d) des arceaux (1),
**caractérisée en ce que** les moyens d'aide au relevage comportent un câble (3) et des moyens (40, 41) d'enroulement du câble (3), qui comportent une poulie (40) permettant l'enroulement du câble lors du relevage du panneau (2, 2a, 2b) et des moyens (41) de rappel élastique de la poulie (40) permettant la rotation de la poulie dans la direction d'enroulement du câble (3) sur la poulie, et **en ce que** le câble (3) est logé dans une glissière (14a, 14b, 14c ou 14d) d'un arceau (1), et relie le panneau relevable (2, 2a, 2b) à la poulie (40), la partie du câble (3) entre le panneau (2, 2a, 2b) et les moyens d'enroulement du câble (3) étant plaquée contre l'une (14") des parois longitudinales de la glissière et suivant la courbure de ladite paroi longitudinale (14").

2. Structure de couverture selon la revendication 1, **caractérisée en ce qu'**une glissière (14a, 14b, 14c ou 14d) comporte une rainure longitudinale (100), dans laquelle est positionné le câble (3), et qui permet un guidage et un maintien latéral du câble (3).

3. Structure de couverture selon les revendications 1 ou 2, **caractérisée en ce que** les moyens (41) de rappel élastique de la poulie (40) comportent un ressort de rappel.

4. Structure de couverture selon la revendication 3, **caractérisée en ce que** le ressort de rappel est un ressort de torsion en spiral.

5. Structure de couverture selon l'une des revendications 1 à 4, **caractérisée en ce que** les moyens d'aide au relevage du panneau relevable (2, 2a, 2b) comportent au moins deux ensembles de relevage qui comportent chacun un câble (3), une poulie (40), et des moyens de rappel élastiques (41), et qui sont montés respectivement sur les deux arceaux (1) en vis-à-vis supportant le panneau relevable (2, 2a, 2b).

6. Structure de couverture selon l'une des revendications 1 à 5, **caractérisée en ce que** les moyens (41) de rappel élastique sont adaptés de manière à exercer une traction suffisamment forte sur le panneau relevable (2) pour éviter que ledit panneau (2) ne coulisse vers le bas, jusque dans sa position fermée, sous l'action de son seul poids.

7. Structure de couverture selon la revendication 6, **caractérisée en ce que** les moyens (41) de rappel élastique sont adaptés de manière à exercer une traction apte à maintenir le panneau (2) immobile en position ouverte, quelle que soit la position de relevage, lorsqu'il est relâché par l'utilisateur.

8. Structure de couverture selon l'une des revendications 1 à 7, **caractérisée en ce qu'**elle comprend au moins deux panneaux relevables coulissant (2a, 2b), et des moyens de liaison (P') permettant de solidariser temporairement ensemble les deux panneaux relevables (2a, 2b).

9. Structure de couverture selon l'une des revendications 1 à 8, **caractérisée en ce qu'**elle comprend au moins deux panneaux relevables (2a, 2b) qui sont manipulables indépendamment l'un de l'autre.

10. Structure de couverture selon l'une des revendications 8 ou 9, **caractérisée en ce que** chacun des panneaux relevables (2a, 2b) est équipé de ses propres moyens d'aide au relevage, lesdits moyens d'aide au relevage comportant au moins un câble (3), une poulie (40), et des moyens de rappel élastiques (41).

11. Structure de couverture selon l'une des revendications 1 à 10, **caractérisée en ce qu'**elle comporte des moyens de verrouillage/déverrouillage permettant en position verrouillée de bloquer un panneau relevable (2, 2a, 2b), et en position déverrouillée de libérer le panneau relevable (2, 2a, 2b).

12. Structure de couverture selon l'une des revendications 1 à 11, **caractérisée en ce que** la poulie (40) et les moyens de rappel élastiques (41) sont logés intégralement dans un boitier (4) qui est fixé sur un arceau (1).

13. Structure de couverture selon l'une des revendications 1 à 12, **caractérisée en ce que** le câble (3) est un câble non métallique.

14. Structure de couverture selon l'une des revendications 1 à 13, **caractérisée en ce que** le câble (3) comprend une âme et une couverture qui est non métallique.

15. Structure de couverture selon l'une des revendications 1 à 14, **caractérisée en ce que** le matériau constitutif de la couverture du câble (3) est un polymère.

16. Structure de couverture selon l'une des revendications 1 à 15, **caractérisée en ce que** l'âme du câble (3) est composée d'au moins deux fils de poly-para-phénylène téréphtalamide retordus.

17. Structure de couverture selon l'une des revendications 1 à 16, **caractérisée en ce que** la couverture du câble (3) est composée de fuseaux tressés.

## Claims

1. Roofing structure of a given area, said structure comprising:
- two roof bows (1) arranged parallel in relation to one another and forming an arch or semi-arch above said given area, the roof bows (1) each including at least one longitudinal guide rail (14a, 14b, 14c or 14d),
- a panel capable of being raised (2, 2a, 2b) including a plate that is mounted and is suitable for sliding in the guide rails (14a/14b or 14c/14d) of the two roof bows, and which can change its shape in such a way as to become adapted to the curvature of the guide rails,
- raising assistance means enabling the raising of the sliding panel (2, 2a, 2b) to be assisted along the guide rails (14a/14b or 14c/14d) of the roof bows (1),
**characterised in that** the raising assistance means include a cable (3) and means (40, 41) for winding the cable (3), which include a pulley (40) enabling the cable to be wound when the panel (2, 2a, 2b) is being raised, and means (41) for the elastic recall of the pulley (40) enabling the pulley to be rotated in the winding direction of the cable (3) on the pulley, and **in that** the cable (3) is housed in a guide rail (14a, 14b, 14c or 14d) of a roof bow (1), and links the raisable panel (2, 2a, 2b) with the pulley (40), the part of the cable (3) between the panel (2, 2a, 2b) and the means for winding the cable (3) being pressed against one (14") of the longitudinal walls of the guide rail, following the curvature of said longitudinal wall (14").

2. Roofing structure according to Claim 1, **characterised in that** one guide rail (14a, 14b, 14c or 14d) includes a longitudinal groove (100) in which the cable (3) is positioned, and which enables the cable (3) to be guided and maintained laterally.

3. Roofing structure according to Claim 1 or 2, **characterised in that** the elastic recall means (41) of the pulley (40) include a return spring.

4. Roofing structure according to Claim 3, **characterised in that** the return spring is a spiral torsion spring.

5. Roofing structure according to one of Claims 1 to 4, **characterised in that** the raising assistance means of the raisable panel (2, 2a, 2b) include at least two raising sets that each include a cable (3), a pulley (40) and elastic recall means (41), and which are mounted respectively on the two roof bows (1) facing one another and supporting the raisable panel (2, 2a, 2b).

6. Roofing structure according to one of Claims 1 to 5, **characterised in that** the elastic recall means (41) are adapted in such a way as to exercise sufficiently strong traction on the raisable panel (2) in order to prevent said panel (2) from sliding downwards, as far as its closed position, under the action of its weight alone.

7. Roofing structure according to Claim 6, **characterised in that** the elastic recall means (41) are adapted in such a way as to exercise traction suitable for maintaining the panel (2) immobile in the open position, whatever the raising position may be, when it is released by the user.

8. Roofing structure according to one of Claims 1 to 7, **characterised in that** it comprises at least two raisable, sliding panels (2a, 2b) and connecting means (P') enabling the two raisable panels (2a, 2b) to be temporarily united.

9. Roofing structure according to one of Claims 1 to 8, **characterised in that** it comprises at least two raisable panels (2a, 2b) that can be manipulated independently of one another.

10. Roofing structure according to one of Claims 8 or 9, **characterised in that** each of the raisable panels (2a, 2b) is equipped with its own raising assistance means, said raising assistance means including at least a cable (3), a pulley (40) and elastic recall means (41).

11. Roofing structure according to one of Claims 1 to 10, **characterised in that** it includes locking/unlocking means that in the locked position enable the raisable panel (2, 2a, 2b) to be blocked, and in the unlocked position enable the raisable panel (2, 2a, 2b) to be released.

12. Roofing structure according to one of Claims 1 to 11, **characterised in that** the pulley (40) and the elastic recall means (41) are fully accommodated in a casing (4) that is fixed on a roof bow (1).

13. Roofing structure according to one of Claims 1 to 12, **characterised in that** the cable (3) is a non-metallic cable.

14. Roofing structure according to one of Claims 1 to 13, **characterised in that** the cable (3) comprises a core and a covering that is non-metallic.

15. Roofing structure according to one of Claims 1 to 14, **characterised in that** the material making up the covering of the cable (3) is a polymer.

16. Roofing structure according to one of Claims 1 to 15, **characterised in that** the core of the cable (3) is composed of at least two twisted filaments of poly-para- phenylene terephthalamide.

17. Roofing structure according to one of Claims 1 to 16, **characterised in that** the covering of the cable (3) is composed of braided strands.

## Patentansprüche

1. **Struktur zum Abdecken** eines gegebenen Bereichs, wobei die Struktur aufweist
- zwei einander gegenüberliegend angeordnete, parallel verlaufende Bögen (1), die ein Gewölbe bzw. Halbgewölbe über dem gegebenen Bereich bilden, wobei die Bögen (1) jeweils zumindest eine Längsschiebeführung (14a, 14b, 14c oder 14d) aufweisen,
- ein anhebbares Segment (2, 2a, 2b) mit einer Platte, die in den Schiebeführungen (14a/14b bzw. 14c/14d) der beiden Bögen gelagert und darin verschiebbar ist und die so verformbar ist, dass sie sich an die Krümmung der Schiebeführungen anpasst,
- Anhebehilfsmittel, mit denen das Anheben des verschiebbaren Segments (2,2a, 2b) entlang der Schiebeführungen (14a/14b bzw. 14c/14d) der Bögen (1) unterstützt werden kann,
**dadurch gekennzeichnet, dass** die Anhebehilfsmittel ein Seil (3) und Mittel (40, 41) zum Aufwickeln des Seils (3) enthalten, die eine Seilrolle (40) aufweisen, welche das Aufwickeln des Seils beim Anheben des Segments (2, 2a, 2b) gestattet, sowie Federrückstellmittel (41) für die Seilrolle (40), welche die Drehung der Seilrolle in Aufwickelrichtung des Seils (3) auf die Seilrolle gestatten, und dass das Seil (3) in einer Schiebeführung (14a, 14b, 14c bzw. 14d) eines Bogens (1) aufgenommen ist und das anhebbare Segment (2, 2a, 2b) mit der Seilrolle (40) verbindet, wobei der Abschnitt des Seils (3) zwischen Segment (2, 2a, 2b) und Mitteln zum Aufwickeln des Seils (3) an eine (14") der Längswandungen der Schiebeführung gemäß der Krümmung der genannten Längswandung (14") angedrückt wird.

2. Abdeckstruktur nach Anspruch 1, **dadurch gekennzeichnet, dass** eine Schiebeführung (14a, 14b, 14c bzw. 14d) eine Längsnut (100) aufweist, in welcher das Seil (3) positioniert ist und die eine Führung und einen seitlichen Halt für das Seil (3) gestattet.

3. Abdeckstruktur nach den Ansprüchen 1 oder 2, **dadurch gekennzeichnet, dass** die Federrückstellmittel (41) für die Seilrolle (40) eine Rückstellfeder enthalten.

4. Abdeckstruktur nach Anspruch 3, **dadurch gekennzeichnet, dass** die Rückstellfeder eine Torsionsschraubenfeder ist.

5. Abdeckstruktur nach einem der Ansprüche 1 bis 4, **dadurch gekennzeichnet, dass** die Anhebehilfsmittel zum Anheben des anhebbaren Segments (2, 2a, 2b) zumindest zwei Anhebebaugruppen enthalten, die jeweils ein Seil (3), eine Seilrolle (40) und Federrückstellmittel (41) aufweisen und an den beiden jeweiligen gegenüberliegenden Bögen (1) montiert sind, die das anhebbare Segment (2, 2a, 2b) tragen.

6. Abdeckstruktur nach einem der Ansprüche 1 bis 5, **dadurch gekennzeichnet, dass** die Federrückstellmittel (41) darauf ausgelegt sind, eine ausreichend starke Zugkraft auf das anhebbare Segment (2) auszuüben, um zu vermeiden, dass das Segment (2) allein unter der Wirkung seines Gewichts bis in seine Schließstellung nach unten gleitet.

7. Abdeckstruktur nach Anspruch 6, **dadurch gekennzeichnet, dass** die Federrückstellmittel (41) darauf ausgelegt sind, eine Zugkraft auszuüben, mit welcher unabhängig von der Anhebestellung das Segment (2) in Offenstellung unbewegt gehalten werden kann, sobald der Benutzer es loslässt.

8. Abdeckstruktur nach einem der Ansprüche 1 bis 7, **dadurch gekennzeichnet, dass** sie zumindest zwei verschiebbare, anhebbare Segmente (2a, 2b) und Verbindungsmittel (P') aufweist, mit denen die beiden anhebbaren Segmente (2a, 2b) vorübergehend zusammengehalten werden können.

9. Abdeckstruktur nach einem der Ansprüche 1 bis 8, **dadurch gekennzeichnet, dass** sie zumindest zwei anhebbare Segmente (2a, 2b) aufweist, die unabhängig voneinander gehandhabt werden können.

10. Abdeckstruktur nach einem der Ansprüche 8 oder 9, **dadurch gekennzeichnet, dass** jedes der anhebbaren Segmente (2a, 2b) mit eigenen Anhebehilfsmitteln ausgestattet ist, wobei die Anhebehilfsmittel zumindest ein Seil (3), eine Seilrolle (40) und Federrückstellmittel (41) aufweisen.

11. Abdeckstruktur nach einem der Ansprüche 1 bis 10, **dadurch gekennzeichnet, dass** sie Ver-/Entriegelungsmittel aufweist, die in Verriegelungsstellung das Sichern eines anhebbaren Segments (2, 2a, 2b) und in Entriegelungsstellung das Freigeben des anhebbaren Segments (2, 2a, 2b) gestatten.

12. Abdeckstruktur nach einem der Ansprüche 1 bis 11, **dadurch gekennzeichnet, dass** die Seilrolle (40) und die Federrückstellmittel (41) vollständig in einem Gehäuse (4) aufgenommen sind, das an einen Bogen (1) befestigt ist.

13. Abdeckstruktur nach einem der Ansprüche 1 bis 12, **dadurch gekennzeichnet, dass** das Seil (3) ein nichtmetallisches Seil ist.

14. Abdeckstruktur nach einem der Ansprüche 1 bis 13, **dadurch gekennzeichnet, dass** das Seil (3) eine Kabelseele und einen nichtmetallischen Überzug aufweist.

15. Abdeckstruktur nach einem der Ansprüche 1 bis 14, **dadurch gekennzeichnet, dass** das Material, aus dem der Überzug des Seils (3) besteht, ein Polymer ist.

16. Abdeckstruktur nach einem der Ansprüche 1 bis 15, **dadurch gekennzeichnet, dass** die Kabelseele (3) aus zumindest zwei verzwirnten Drähten aus Polyparaphenylen-Terephtalamid zusammengesetzt ist.

17. Abdeckstruktur nach einem der Ansprüche 1 bis 16, **dadurch gekennzeichnet, dass** der Überzug des Seils (3) aus verflochtenen Strängen zusammengesetzt ist.
